# EUROPÄISCHE PATENTSCHRIFT

(11) **EP 4 100 132 B1**
(45) Veröffentlichungstag und Bekanntmachung des Hinweises auf die Patenterteilung: **20.05.2026**
(21) Anmeldenummer: 21704205.0
(22) Anmeldetag: 03.02.2021
(51) Int. Cl.: A63B 5/11, F16B 7/04

(54) **TRAMPOLIN**
TRAMPOLINE
TRAMPOLINE

(30) Priorität: 04.02.2020 DE 102020102802
(43) Veröffentlichungstag der Anmeldung: 14.12.2022
(73) Patentinhaber: bellicon AG, 6005 Luzern (CH)
(72) Erfinder: KOPF, Günter, 77971 Kippenheim (DE)
(74) Vertreter: Rätsch, Caroline
(86) Internationale Anmeldenummer: PCT/EP2021/052532
(87) Internationale Veröffentlichungsnummer: WO 2021/156299

(56) Entgegenhaltungen:
- WO-A1-2008/039273
- CN-U- 203 539 961
- DE-A1- 2 348 434
- US-A1- 2004 071 496
- US-A1- 2009 023 558

## Beschreibung

Die Erfindung betrifft ein Trampolin mit einem Rahmen, der eine Mehrzahl von Rahmensegmenten aufweist.

Bei den Trampolinen handelt es sich insbesondere um so genannte Mini-Trampoline, die auch Fitness-Trampoline genannt werden. Derartige Trampoline haben einen maximalen Durchmesser von 2 bis 3 Metern und finden Einsatz in der Physiotherapie und im Fitnessbereich.

Bei den Mini- oder Fitness-Trampolinen unterscheidet man zwischen Trampolinen mit einer Federaufhängung und einer Gummiseilaufhängung. Bei der Federaufhängung ist an dem Rahmen ein Sprungtuch über Spiralfedern aus Metall befestigt. Bei der Gummiseilaufhängung kommen ein oder mehrere elastische Seilringe oder (offene) Seile zum Einsatz, die das Sprungtuch mit dem Rahmen verbinden. Die größere Elastizität einer derartigen Gummiseilaufhängung gegenüber den Metallfedern sorgt für ein "weicheres" Abbremsen des Körpers und schont insoweit nicht nur die Gelenke, sondern verlängert auch die muskulären Belastungs- und Entlastungsphasen beim Springen, was vorteilhafte Trainingseffekte mit sich bringt.

Die Erfindung ist sowohl auf Trampoline mit Federaufhängungen als auch auf Trampoline gerichtet, bei denen die Aufhängung als elastisches Seil oder elastischer Seilring ausgebildet ist. Grundsätzlich kann die Erfindung bei jeglicher Art von Trampolinen Einsatz finden, unabhängig von der Art der Aufhängung des Sprungtuchs und der Geometrie des Rahmens.

Den bekannten Trampolinen ist gemein, dass sie über einen umlaufenden Rahmen verfügen, von dem Beine abgehen. Die Sprungmatte ist zwischen dem Rahmen aufgespannt. Die Beine sorgen dafür, dass sich der Rahmen in einem bestimmten Abstand zum Boden befindet, wenn das Trampolin aufgestellt ist. Hierdurch wird gewährleistet, dass sich die Sprungmatte beim Springen in Richtung auf den Boden bewegen kann.

Aus der WO 2012 167 313 A1 ist ein Trampolin bekannt, dessen Rahmen aus einer Mehrzahl von Rahmensegmenten gebildet wird. Die Rahmensegmente bieten den Vorteil, dass das Trampolin platzsparend transportiert werden kann, um vor Ort aufgebaut zu werden. Das bekannte Trampolin weist eine Mehrzahl von Verbindungsstücken auf. Die Rahmensegmente werden zum Aufbau des Trampolins in die Verbindungsstücke gesteckt.

US 2009/023558 A1 beschreibt ein Trampolin mit einem Rahmen, der eine Mehrzahl von Rahmensegmenten aufweist, und mit einer Mehrzahl von Verbindungsstücken, wobei jedes Verbindungsstück dazu ausgebildet ist, zwei Rahmensegmente miteinander zu verbinden.

Aus der Praxis sind sowohl runde als auch polygonale Rahmenformen bekannt. Die Erfindung ist insbesondere auf polygonale Trampoline gerichtet.

Der Erfindung liegt die Aufgabe zugrunde, ein aus mehreren Rahmensegmenten aufgebautes Trampolin zur Verfügung zu stellen, das einerseits leicht zusammengebaut werden kann und das andererseits im aufgebauten Zustand auch bei einer intensiven Benutzung stabil ist.

Die Aufgabe wird gelöst durch ein Trampolin mit den Merkmalen des Patentanspruchs 1.

Das erfindungsgemäße Trampolin weist eine Mehrzahl von Verbindungsstücken auf. Jedes Verbindungsstück ist dazu ausgebildet, zwei Rahmensegmente miteinander zu verbinden.

Jedes Verbindungsstück weist mindestens einen ersten Zentrierabschnitt sowie mindestens einen ersten Stützabschnitt auf. Der Zentrierabschnitt und der Stützabschnitt sind mit Abstand zueinander über einen Verbindungsabschnitt verbunden, der einen kleineren Durchmesser aufweist als der Zentrierabschnitt und der Stützabschnitt. Jedes Verbindungsstück ist mit dem ersten Zentrierabschnitt und dem ersten Stützabschnitt in ein erstes Rahmensegment steckbar oder eingesteckt.

Der Erfindung liegt die Erkenntnis zugrunde, dass ein Verbindungsstück dann eine besonders stabile Verbindung von zwei Rahmensegmenten schaffen kann, wenn es möglichst lang ist, sich also über einen möglichst langen Abschnitt in den Rahmensegmenten abstützt. Andererseits ergeben sich bei einem langen Abschnitt Schwierigkeiten bei der Montage. Aus diesem Grund geht die Erfindung einen neuen Weg. Sie kommt zu dem Ergebnis, dass eine stabile Verbindung dann geschaffen werden kann, wenn das Verbindungsstück einen Zentrierabschnitt und einen Stützabschnitt aufweist, die durch einen Verbindungsabschnitt mit geringerem Durchmesser mit Abstand zueinander angeordnet sind.

Unter einer stabilen Verbindung wird insbesondere auch eine verwindungssteife Verbindung verstanden. Insbesondere bei Verwendung einer Haltestange, die mit dem Rahmen verbunden ist und an der sich der Benutzer bei Übungen abstützen kann, wird der Rahmen Hebelkräften ausgesetzt, die zu einer Verwindung des Rahmens führen können. Diese Verwindungskräfte ist das erfindungsgemäße Verbindungsstück besonders gut in der Lage aufzunehmen. Zur Verbindung der Rahmensegmente werden sowohl der Zentrierabschnitt als auch der Stützabschnitt in ein Rahmensegment eingesteckt. Vorzugsweise wird der Stützabschnitt vollständig in ein Rahmensegment eingesteckt. Durch den Abstand von Zentrierabschnitt und Stützabschnitt kann der Rahmen große Kräfte aufnehmen.

Neben seiner Funktion als Abstandshalter weist der Verbindungsabschnitt einen weiteren Vorteil auf. Durch seinen kleineren Durchmesser erleichtert er ein Zusammenstecken der einzelnen Rahmensegmente ganz erheblich. Insbesondere bei einem polygonalen Trampolin, also bei einem Trampolinrahmen mit mehreren Ecken, kommt dieser Vorteil zum Tragen. Versuche haben gezeigt, dass insbesondere das Verbinden der letzten beiden Rahmensegmente dadurch besonders erleichtert, wenn nicht gar erst ermöglicht wird, dass der Verbindungsabschnitt einen kleineren Durchmesser aufweist als der Zentrierabschnitt und der Stützabschnitt. Durch den kleineren Durchmesser kann das Verbindungsstück nämlich auch schräg in ein Rahmensegment eingeschoben werden. Dies ist insbesondere bei der Verbindung der letzten beiden Rahmensegmente eines polygonalen Rahmens besonders hilfreich.

In einer vorteilhaften Ausführungsform ist das Verbindungsstück mit einem Ende in oder an einem Rahmensegment stationär fixiert, beispielsweise verklebt, verpresst oder verschweißt. Mit dem anderen Ende kann das Verbindungsstück in ein anderes Rahmensegment eingesteckt werden. Hierzu weist das Verbindungsstück einen Zentrierabschnitt und einen Stützabschnitt auf, die über einen Verbindungsabschnitt mit Abstand zueinander verbunden sind. Mit dem Zentrierabschnitt und dem Stützabschnitt wird das Verbindungsstück in das andere Rahmensegment eingesteckt.

In einer alternativen und ebenfalls vorteilhaften Ausführungsform weist das Verbindungsstück einen ersten und einen zweiten Zentrierabschnitt sowie einen ersten und einen zweiten Stützabschnitt auf, wobei jedes Verbindungsstück mit dem ersten Zentrierabschnitt und dem ersten Stützabschnitt in ein erstes Rahmensegment und mit dem zweiten Zentrierabschnitt und dem zweiten Stützabschnitt in ein zweites Rahmensegment eingesteckt oder einsteckbar ist. Der erste Zentrierabschnitt ist mit dem ersten Stützabschnitt mit Abstand über einen Verbindungsabschnitt verbunden und der zweite Zentrierabschnitt ist mit dem zweiten Zentrierabschnitt ebenfalls mit Abstand über einen Verbindungsabschnitt verbunden. Hierbei handelt es sich um ein loses Verbindungsstück, das mit seinem einen Ende in ein erstes Rahmensegment und mit seinem anderen Ende in ein zweites Rahmensegment einsteckbar oder eingesteckt ist. Das Verbindungsstück kann also zwei Rahmensegmente miteinander verbinden.

Das erfindungsgemäße Verbindungsstück kann wie vorstehend ausgeführt entweder vorinstalliert, also bereits fest mit einem Rahmensegment verbunden sein. Mit seinem freien Ende, das den Zentrierabschnitt, den Stützabschnitt und den Verbindungsabschnitt trägt, ist es in ein zweites Rahmensegment steckbar. Alternativ handelt es sich bei dem Verbindungsstück um ein gesondertes (loses) Bauteil. Dann weist das Verbindungsstück auf jeder Seite einen Zentrierabschnitt und einen Stützabschnitt auf, die jeweils über einen Verbindungsabschnitt miteinander verbunden sind. Sofern im Folgenden von mindestens einem Zentrierabschnitt und/oder von mindestens einem Stützabschnitt gesprochen wird, umfasst diese Formulierung also beide vorbeschriebenen Ausführungsformen. Sofern im Folgenden Spezifikationen von lediglich einem Zentrierabschnitt und/oder einem Stützabschnitt und/oder einem Verbindungsabschnitt erörtert werden, gelten diese Spezifikationen auch für zwei Zentrierabschnitte, Stützabschnitte und/oder Verbindungsabschnitte, sofern dies sinnvoll ist.

Gemäß der Erfindung weist der Stützabschnitt eine Kontaktfläche zur Anlage an einer Innenfläche des Rahmensegments auf. Diese Kontaktfläche darf nicht zu groß sein, damit das Verbindungsstück zur Einsteckrichtung geneigt werden kann. Andererseits muss die Kontaktfläche so dimensioniert werden, dass sie die Belastungskräfte während einer Benutzung des Trampolins auffangen kann. In ersten Versuchen hat es sich als vorteilhaft ergeben, wenn die Kontaktfläche des Stützabschnitts kleiner ist als die Kontaktfläche des Zentrierabschnitts. Vorzugsweise ist die Erstreckung der Kontaktfläche in Achserstreckung des Verbindungsstücks kleiner als 2 cm.

Es wurde bereits vorstehend angesprochen, dass das erfindungsgemäße Verbindungsstück besonders vorteilhaft Anwendung bei polygonalen Trampolinen findet.

Gemäß der Erfindung bilden zwei aneinander angrenzende Rahmensegmente eine Verbindungsstelle, die zwischen zwei Beinen des Trampolins liegt. An dieser Stelle geht ein Rahmensegment gerade in das angrenzende Rahmensegment über. Die Beine wird man vorzugsweise an den Ecken des Rahmens vorsehen. Zwei aneinander angrenzende Rahmensegmente weisen also vorteilhaft dieselbe (gerade) Achse auf. In dieser Achse liegt vorzugsweise das Verbindungsstück. Eine vorteilhafte Ausführungsform der Erfindung ist dadurch gekennzeichnet, dass der Zentrierabschnitt, der Stützabschnitt und vorteilhafterweise auch der Verbindungsabschnitt auf einer gemeinsamen geraden Achse liegen.

Die Rahmensegmente sind zweckmäßig als Rohr ausgebildet, das eine Innenfläche aufweist. Das Rohr weist vorzugsweise einen runden, insbesondere einen kreisrunden, Querschnitt auf. Ein derartiger Querschnitt gestattet besonders vorteilhaft ein Abgleiten von elastischen Seilringen, die die Sprungmatte mit dem Rahmen verbinden. Der Durchmesser des Rohrs beträgt vorzugsweise zwischen 3 und 4 cm, beispielsweise ca. 3,5 cm.

Im zusammengesetzten Zustand des Trampolins liegen der Zentrierabschnitt und der Stützabschnitt an der Innenfläche an. Hierdurch kann sich das Verbindungsstück an zwei beabstandeten Stellen an der Innenfläche jedes Rahmensegments abstützen. Eine derartige Konstruktion ist stabil und verwindungssteif. Vorzugsweise liegt der Verbindungsabschnitt nicht an der Innenfläche an. Seine primäre Funktion besteht darin, den Zentrierabschnitt und den Stützabschnitt mit Abstand zu verbinden. Gleichzeitig gestattet sein geringerer Durchmesser einen einfachen Zusammenbau des Trampolinrahmens.

Bei der Benutzung des Trampolins treten an den Verbindungsstellen hohe Kräfte auf. Zum einen können die Kräfte durch das Springen auf dem Trampolin hervorgerufen werden. Zusätzlich kann das Trampolin mit einer Haltestange ausgerüstet sein, an der sich der Benutzer während der Benutzung festhält. Diese Haltestange übt zusätzliche Hebelkräfte auf den Rahmen aus. Das erfindungsgemäße Verbindungsstück ist besonders gut in der Lage, diese Kräfte aufzunehmen und eine Verwindung des Rahmens zu verhindern. Dies gilt insbesondere dann, wenn das Verbindungsstück aus Vollmaterial ausgebildet ist, wie es als vorteilhaft vorgeschlagen wird. Beispielsweise besteht das Verbindungsstück aus Metall. Es kann aber auch aus Kunststoff bestehen. Auch eine Mischung ist möglich. Zum Beispiel bestehen der Zentrierabschnitt und der Stützabschnitt aus Kunststoff, wohingegen der Verbindungsabschnitt aus Metall besteht. Eine derartige Kombination weist gute Passeigenschaften bei gleichzeitiger Stabilität auf.

Eine vorteilhafte Ausführungsform der Erfindung ist dadurch gekennzeichnet, dass das Verbindungsstück einen radialen Steg aufweist. Der Steg bildet eine Einsteckbegrenzung für das Verbindungsstück. Hierzu steht er von dem Zentrierabschnitt ab. Der Steg ist zweckmäßig zumindest teilweise, vorzugsweise vollständig, in Umfangsrichtung umlaufend ausgebildet. Er kann so besonders gut (und gleichmäßig) bei der Benutzung des Trampolins auftretende Kräfte aufnehmen.

Zweckmäßig ist der Steg zwischen dem ersten und dem zweiten Zentrierabschnitt angeordnet. Eine derartige Konstruktion ist kompakt.

Als besonders vorteilhaft wird es angesehen, wenn der Steg einen Außendurchmesser aufweist, der mindestens dem Außendurchmesser eines angrenzenden Rahmensegments entspricht. Sofern der Steg dem Außendurchmesser entspricht, entsteht der optische Eindruck, dass der Rahmen eine durchgehende gleichmäßige Rahmenstärke aufweist. Außerdem bildet so der Steg kein Hindernis für aufgespannte Seilringe. Diese können vielmehr leicht auf dem Steg abgleiten. Der Steg kann auch radial über den Rahmen hinausgehen. Dann werden die Verbindungsstelle optisch akzentuiert.

Wie vorstehend ausgeführt, bildet der Steg vorteilhaft eine Einsteckbegrenzung für das Verbindungsstück. Vorzugsweise weist der Steg mindestens eine seitliche Stoßfläche für ein Rahmensegment auf. Das Rahmensegment kommt beim Zusammenbau des Rahmens zur Anlage an die Stoßfläche. Sofern das Verbindungsstück als gesondertes Bauteil ausgebildet ist und zwei Zentrierabschnitte aufweist, weist der Steg zweckmäßig zwei Stoßflächen auf. Eine Stoßfläche wirkt mit einem Rahmensegment zusammen und die andere Stoßfläche wirkt mit dem anderen Rahmensegment zusammen. Vorteilhafterweise bildet die mindestens eine Stoßfläche eine Ebene, die im zusammengebauten Zustand des Rahmens senkrecht zur Achse des angrenzenden Rahmensegments verläuft.

Der Zentrierabschnitt und der Stützabschnitt weisen eine Stützfunktion auf. Beide Abschnitte nehmen Kräfte bei der Benutzung des Trampolins auf. Hierzu können sie verschiedene Konturen aufweisen. Wichtig ist, dass sie sich mit ihrer Kontaktfläche zumindest teilweise an der Innenfläche des jeweiligen Rahmensegments abstützen. Eine besonders stabile Ausführungsform ist dadurch gekennzeichnet, dass der Zentrierabschnitt und/oder der Stützabschnitt eine zylindrische Kontaktfläche aufweisen. Die zylindrische Kontaktfläche gestattet eine vollflächige Anlage an dem jeweiligen Rahmensegment, sofern es sich um ein rundes Rohr handelt, wie es als vorteilhaft angesehen wird. Gleichzeitig ist ein Verbindungsstück mit zylindrischen Kontaktflächen einfach herstellbar. Es kann beispielsweise gedreht werden.

Zweckmäßig schließt sich an die Kontaktfläche eine Fase an. Dies erleichtert ein Einstecken in das jeweilige Rahmensegment.

Der Verbindungsabschnitt kann vorteilhaft als Stange ausgebildet sein. Der Durchmesser der Stange ist vorzugsweise kleiner als der Durchmesser des Zentrier- und des Stützabschnitts. Für eine einfache Herstellung des Verbindungsstücks ist die Stange vorteilhafterweise mit dem Zentrierabschnitt und/oder dem Stützabschnitt verschweißt. Alternativ ist sie verklebt. Auch eine Presspassung kommt in Betracht.

Der Verbindungsabschnitt, zum Beispiel die Stange, kann durch den Zentrierabschnitt hindurchgehen. Hierzu weist der Zentrierabschnitt und/oder der Stützabschnitt eine zentrale Öffnung auf, in die der Verbindungsabschnitt eingreift.

Im Übrigen kann das Verbindungsstück auch in einem Stück gegossen (z.B. Kunststoff) oder gedreht (z.B. Metall) werden.

Es wurde bereits vorstehend angesprochen, dass bei der Benutzung des Trampolins mit und ohne Haltestange hohe Kräfte auftreten. Zur Aufnahme der Kräfte ist es vorteilhaft, wenn der Zentrierabschnitt und der Stützabschnitt in Abstand zueinander angeordnet sind. In Versuchen hat es sich als vorteilhaft ergeben, dass die Länge des Verbindungsabschnitts mindestens 3 cm beträgt.

Im Folgenden wird die Erfindung anhand eines bevorzugten Ausführungsbeispiels im Zusammenhang mit der anhängenden Zeichnung näher erläutert. Die Zeichnung zeigt in
- Figur 1: in einer schematischen Darstellung eine perspektivische Ansicht eines erfindungsgemäßen Trampolins im zusammengesetzten Zustand;
- Figur 2a: in einer schematischen Darstellung eine Seitenansicht eines erfindungsgemäßen Verbindungsstücks;
- Figur 2b: in einer schematischen Darstellung eine perspektivische Ansicht des erfindungsgemäßen Verbindungsstücks nach Figur 2a;
- Figur 3a: in einer schematischen Darstellung ein Zustand beim Zusammenbau des erfindungsgemäßen Trampolins, bei dem das Verbindungsstück in ein erstes Rahmensegment eingesteckt ist;
- Figur 3b: in einer schematischen Darstellung ein Zustand beim Zusammenbau des erfindungsgemäßen Trampolins, bei dem das Verbindungsstück in ein erstes Rahmensegment und teilweise in ein zweites Rahmensegment eingesteckt ist; und
- Figur 3c: in einer schematischen Darstellung ein Zustand beim Zusammenbau des erfindungsgemäßen Trampolins, bei dem das Verbindungsstück vollständig in das erste und das zweite Rahmensegment eingesteckt ist.

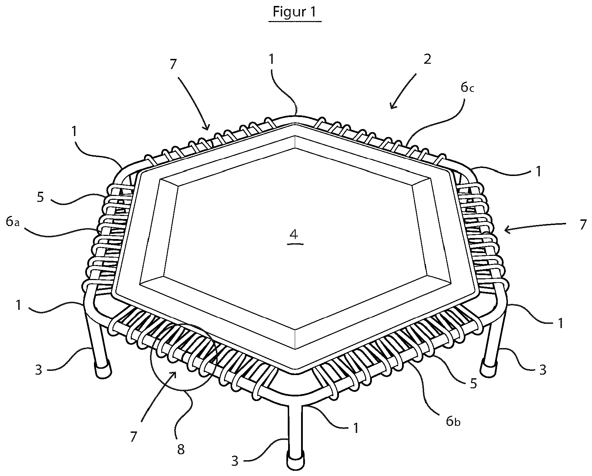

Figur 1 zeigt ein erfindungsgemäßes Trampolin in einer perspektivischen Ansicht. Bei dem Trampolin handelt es sich um ein hexagonales Trampolin, also um ein Trampolin mit sechs Ecken 1. Grundsätzlich ist die Erfindung auf jedes polygonale Trampolin gerichtet.

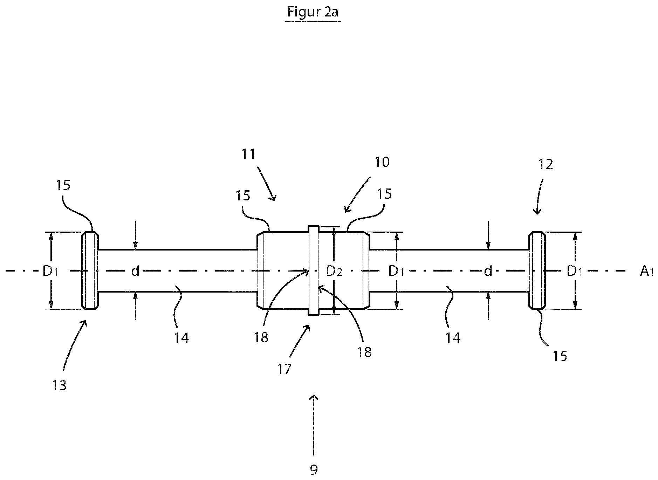

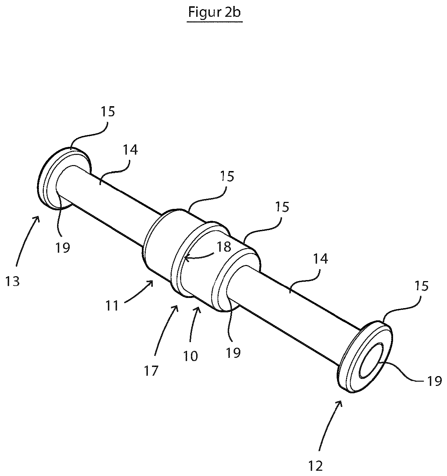

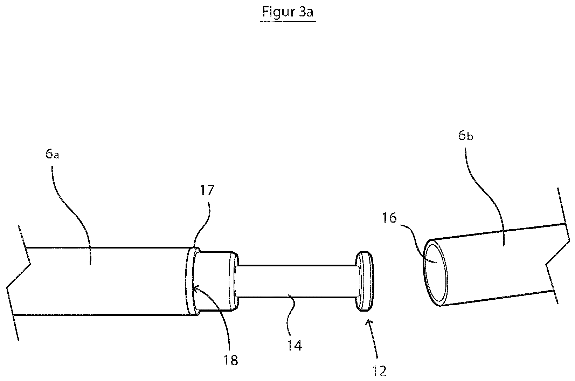

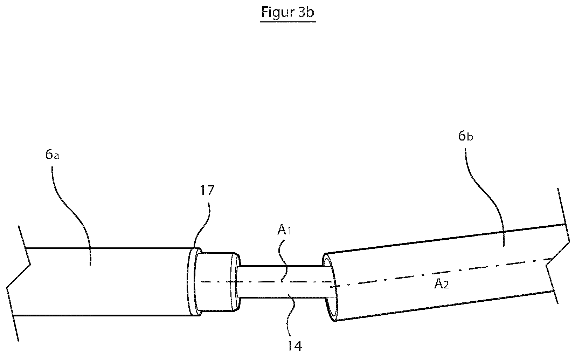

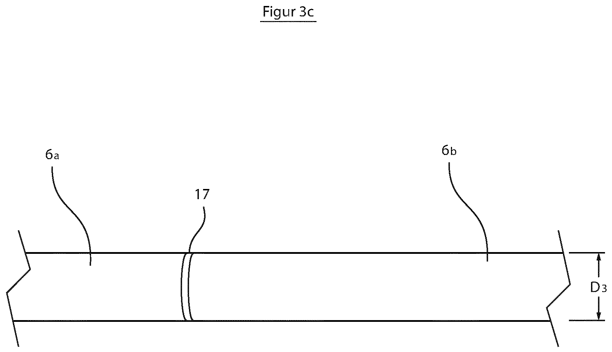

Das erfindungsgemäße Trampolin weist einen Rahmen 2 und eine Mehrzahl von Beinen 3 auf. Die Beine 3 sind an den Ecken 1 des Rahmens 2 angeordnet. Mit dem Bezugszeichen 4 ist eine Sprungmatte gekennzeichnet, die über elastische Seilringe 5 auf bekannte Art und Weise mit dem Rahmen 2 verbunden sind. Die Art der Befestigung der Sprungmatte 4 an dem Rahmen 2 ist für die Erfindung irrelevant. Hier kommen auch andere Befestigungsarten in Betracht, zum Beispiel offene Seilabschnitte oder auch ein langes durchgehendes Seil. Erfindungsgemäß besteht der Rahmen 2 aus mehreren Rahmensegmenten 6a, 6b, 6c. Dies hat den Vorteil, dass das Trampolin in Einzelteilen platzsparend und damit kostensparend transportiert werden kann. Die Rahmensegmente 6a, 6b, 6c sind an Verbindungsstellen 7 miteinander verbunden, wie dies im Zusammenhang mit den Figuren 2 und 3 noch näher erläutert wird. Vorzugsweise weist der Rahmen 2 sechs Ecken 1 und drei Rahmensegmente 6a, 6b, 6c auf. Die Verbindungsstellen 7 befinden sich zwischen zwei Ecken 1. Insbesondere kann zweckmäßig vorgesehen sein, dass zwei Rahmensegmente 6b, 6c bzw. 6a, 6b bzw. 6a. 6c einen geraden Rahmenabschnitt 8 bilden und die Verbindungsstellen 7 im Bereich des geraden Rahmenabschnitts 8 angeordnet sind. Vorliegend ist aus Übersichtsgründen lediglich der gerade Abschnitt 8 der Rahmensegmente 6a, 6b im Bereich der Verbindungsstelle 7 gekennzeichnet.

Im Folgenden wird auf die Figuren 2a und 2b Bezug genommen, die ein erfindungsgemäßes Verbindungsstück 9 zeigen, mit dessen Hilfe die Rahmensegmente 6a, 6b, 6c verbunden werden. Das Verbindungsstück weist einen ersten Zentrierabschnitt 10 und einen zweiten Zentrierabschnitt 11 sowie und einen ersten Stützabschnitt 12 und einen zweiten Stützabschnitt 13 auf. Die Stützabschnitte 12, 13 sind mit dem jeweiligen Zentrierabschnitt 10, 11 über jeweils einen Verbindungabschnitt 14 verbunden und auf Abstand gehalten. Die Zentrierabschnitte 10, 11 weisen in etwa denselben Außendurchmesser D1 auf wie die Stützabschnitte 12, 13, was einschließt, dass die Stützabschnitte geringfügig kleiner ausgebildet sein können also die Zentrierabschnitte. Die Verbindungsabschnitte 14 weisen einen Außendurchmesser d auf, der kleiner ist als der Außendurchmesser D1.

Wie es insbesondere aus Figur 2b zu erkennen ist, weisen die Zentrierabschnitte 10, 11 sowie die Stützabschnitte 12, 13 zylindrische Kontaktflächen 15 auf, die einfach herstellbar sind und einen guten und großflächigen Kontakt zu den zylindrischen Innenflächen 16 (siehe Figur 3a) der Rahmensegmente 6a, 6b, 6c schaffen. Insbesondere die Stützabschnitte 12, 13 brauchen jedoch nicht zwingend zylindrisch zu sein. Auch möglich ist eine Querschnittsform, die zwar nicht rund ist, jedoch eine Zentrierung der Stützabschnitte innerhalb der Rahmensegmente 6a, 6b, 6c gestattet, wie zum Beispiel eine ovale Form oder eine dreieckige Form. In diesen Fällen bildet die nicht-runde Form einen wirksamen Durchmesser, mit dem der jeweilige Abschnitt an den Innenflächen 16 des Rahmensegments anliegt.

Dasselbe gilt für den Verbindungsabschnitt 14. Er ist bei dem gezeigten Ausführungsbeispiel als Stange ausgebildet. Auch hier sind abweichende - nicht-runde - Formen möglich. Wichtig ist im Rahmen des erfindungsgemäß kleineren Durchmessers, dass der jeweilige Verbindungsabschnitt 14 radial nicht über die Zentrierabschnitte 10, 11 und die Stützabschnitte 12, 13 hinausgehen.

Der erste Zentrierabschnitt 10 und der zweite Zentrierabschnitt 11 werden durch einen Steg 17 getrennt, der sich radial erstreckt. Der Steg 17 ist vorzugsweise (wie dargestellt) umlaufend ausgebildet und weist einen Durchmesser D2 auf, der dem Außendurchmesser D3 (siehe Figur 3c) der angrenzenden Rahmensegmente 6a, 6b, 6c entspricht. Er kann auch größer sein als der Durchmesser D3.

Der Steg 17 weist vorteilhaft seitliche Stoßflächen 18 auf, an denen die Rahmensegmente 6a, 6b, 6c im aufgebauten Zustand des Rahmens 2 anliegen. Die Stoßflächen 18 begrenzen die Einstecktiefe des Verbindungsstücks 9 in das jeweilige Rahmensegment 6a, 6b, 6c.

Die Zentrierabschnitte 10, 11, die Stützabschnitte 12, 13 und die Verbindungsabschnitte 14 liegen vorzugsweise auf einer gemeinsamen Achse A1. Hierbei kann es sich um eine Symmetrieachse handeln.

Wie es insbesondere aus Figur 2b gut zu erkennen ist, weisen sowohl die Zentrierabschnitte 10, 11 als auch die Stützabschnitte 12, 13 Öffnungen 19 auf. Die Öffnung 19 der Zentrierabschnitte 10, 11 kann als Durchgangsöffnung ausgebildet sein, die zum Beispiel als Bohrung durch beide Zentrierabschnitte 10, 11 hindurchgeht. Dann können die Verbindungsabschnitte 14 als durchgehende Stange ausgebildet sein, die durch die Durchgangsöffnung hindurchgesteckt und in der Öffnung beispielsweise durch Verschweißung fixiert ist. Alternativ sind die Öffnungen 19 der Zentrierabschnitte 10, 11 als Sacklochbohrung ausgeführt, und die Verbindungsabschnitte 14 sind jeweils in die Sacklochbohrung des Verbindungsabschnitts 10 und des Verbindungsabschnitts 11 eingesteckt und fixiert.

Im Folgenden wird Bezug genommen auf die Figur 3a bis 3c, die verschiedene Zustände des Zusammenbaus des erfindungsgemäßen Trampolins zeigen. Dargestellt ist der gerade Rahmenabschnitt 8 gemäß Figur 1, also lediglich ein Ausschnitt des jeweiligen Rahmensegments.

In Figur 3a ist das Verbindungsstück 9 bereits in das (linksseitige) Rahmensegment 6a eingesteckt. Es liegt mit seinem Steg 17 an dem Rahmensegment 6b an. Der Stützabschnitt 13 und der Zentrierabschnitt 11 sind in dem Rahmensegment 6a aufgenommen. Bei dem Rahmensegment 6b handelt es sich wie bei dem gesamten Rahmen 2 um ein Rohr mit einem runden Querschnitt.

Figur 3b zeigt eine Situation beim Zusammenfügen der Rahmensegmente 6a und 6b, wie sie auftreten kann, kurz bevor der Rahmen 2 vollständig geschlossen wird. Hier wird der Vorteil der Erfindung deutlich. Der Stützabschnitt 12 ist bereits in das Rahmensegment 6b eingesteckt. Durch den kleineren Durchmesser des Verbindungsabschnitts 14 gegenüber dem Stützabschnitt 12 ist das Verbindungsstück 9 in der Lage, auch schräg, also gegenüber der Längsachse A2 des geraden Abschnitts des Rahmensegments 6b geneigt, in das Rahmensegment eingesteckt zu werden. Dies erleichtert den Einsteckvorgang erheblich.

Figur 3c zeigt den zusammengesetzten Zustand der Rahmensegmente 6a und 6b. Hier ist gegenüber Figur 3b nunmehr auch der Zentrierabschnitt 10 in dem Rahmensegment 6c aufgenommen. Es ist nur noch der Steg 17 zu sehen. Dieser weist vorzugsweise denselben Außendurchmesser D2 auf wie die Rahmensegmente 6a und 6b (Durchmesser D3).

Bei dem beschriebenen Ausführungsbeispiel handelt es sich um ein Verbindungsstück, das als gesondertes Bauteil ausgebildet ist, welches in ein erstes Rahmensegment und ein zweites Rahmensegment gesteckt werden kann. Im Rahmen des Erfindungsgedankens gleichermaßen möglich ist eine Konstruktion, bei der das Verbindungsstück bereits mit einem Rahmensegment verbunden ist und lediglich einen Zentrierabschnitt (statt zwei Zentrierabschnitte) und einen Stützabschnitt (statt zwei Stützabschnitte) aufweist. Eine derartige Konstruktion entspricht äußerlich dem in Figur 3a dargestellten Rahmensegment 6a, wobei dann das Verbindungsstück (entgegen dem beschriebenen Ausführungsbeispiel) nicht eingesteckt ist, sondern an dem Rahmensegment 6a fixiert ist. Dann bedarf es beispielsweise auch keines Stützabschnitts innerhalb des Rahmensegments 6a.

### Bezugszeichenliste

- 1: Ecke
- 2: Rahmen
- 3: Bein
- 4: Sprungmatte
- 5: Seilring
- 6a: Rahmensegment
- 6b: Rahmensegment
- 6c: Rahmensegment
- 7: Verbindungsstelle
- 8: gerader Abschnitt
- 9: Verbindungsstück
- 10: Zentrierabschnitt
- 11: Zentrierabschnitt
- 12: Stützabschnitt
- 13: Stützabschnitt
- 14: Verbindungsabschnitt
- 15: Kontaktfläche
- 16: Innenfläche
- 17: Steg
- 18: Stoßfläche
- 19: Öffnung

- D1: Durchmesser
- D2: Durchmesser
- D3: Durchmesser
- d: Durchmesser

- A1: Achse
- A2: Achse

## Patentansprüche

1. Trampolin, mit
- einem Rahmen (2), der eine Mehrzahl von Rahmensegmenten (6a; 6b; 6c) aufweist, und mit
- einer Mehrzahl von Verbindungsstücken (9),
- wobei jedes Verbindungsstück (9) dazu ausgebildet ist, zwei Rahmensegmente (6a; 6b; 6c) miteinander zu verbinden, und
- wobei von dem Rahmen (2) Beine (3) abgehen,
**dadurch gekennzeichnet,**
- **dass** jedes Verbindungsstück (9) mindestens einen ersten Zentrierabschnitt (10) sowie mindestens einen ersten Stützabschnitt (12) aufweist,
- **dass** jedes Verbindungsstück (9) mit dem ersten Zentrierabschnitt (10) und dem ersten Stützabschnitt (12) in ein erstes Rahmensegment (6a; 6b; 6c) eingesteckt oder einsteckbar ist,
- **dass** der Zentrierabschnitt (10) mit dem Stützabschnitt (12) mit Abstand über einen ersten Verbindungsabschnitt (14) verbunden ist, der einen kleineren Durchmesser (d) aufweist als der Zentrierabschnitt und der Stützabschnitt,
- **dass** der Stützabschnitt (12) eine Kontaktfläche (15) zur Anlage an einer Innenfläche (16) des Rahmensegments (6a; 6b; 6c) aufweist, und
- **dass** zwei aneinander angrenzende Rahmensegmente (6a; 6b; 6c) eine Verbindungsstelle (7) bilden, die zwischen zwei Beinen (3) des Trampolins liegt.

2. Trampolin nach Anspruch 1, **dadurch gekennzeichnet, dass** der Zentrierabschnitt (10), der Stützabschnitt (12) und vorzugsweise der erste Verbindungsabschnitt (14) auf einer gemeinsamen geraden Achse (A1) liegen.

3. Trampolin nach Anspruch 1 oder 2, **dadurch gekennzeichnet, dass** die Beine (3) an Ecken (1) des Rahmens angeordnet sind.

4. Trampolin nach einem der Ansprüche 1 bis 3, **dadurch gekennzeichnet, dass** die Rahmensegmente (6a; 6b; 6c) als Rohr mit einer Innenfläche (16) ausgebildet sind und dass im zusammengesetzten Zustand des Trampolins der Zentrierabschnitt (10) und der Stützabschnitt (12) an der Innenfläche (16) anliegen.

5. Trampolin nach Anspruch 4, **dadurch gekennzeichnet, dass** der erste Verbindungsabschnitt (14) im zusammengesetzten Zustand des Trampolins nicht an der Innenfläche (16) anliegt.

6. Trampolin nach einem der Ansprüche 1 bis 5, **dadurch gekennzeichnet, dass** das Verbindungsstück (9) aus Vollmaterial ausgebildet ist.

7. Trampolin nach einem der Ansprüche 1 bis 6, **dadurch gekennzeichnet, dass** das Verbindungsstück (9) einen radialen Steg (17) aufweist, der die Einstecktiefe des Verbindungsstücks (9) in das erste Rahmensegment (6a; 6b; 6c) begrenzt.

8. Trampolin nach Anspruch 7, **dadurch gekennzeichnet, dass** der Steg (17) zumindest teilweise, vorzugsweise vollständig, in Umfangsrichtung umlaufend ausgebildet ist.

9. Trampolin nach Anspruch 7 oder 8, **dadurch gekennzeichnet, dass** der Steg (17) einen Außendurchmesser (D2) aufweist, der im Wesentlichen dem Außendurchmesser (D3) eines angrenzenden Rahmensegments (6a; 6b; 6c) entspricht.

10. Trampolin nach einem der Ansprüche 7 bis 9, **dadurch gekennzeichnet, dass** der Steg (17) mindestens eine seitliche Stoßfläche (18) für ein Rahmensegment (6a; 6b; 6c) bildet.

11. Trampolin nach einem der Ansprüche 1 bis 10, **dadurch gekennzeichnet, dass** der Zentrierabschnitt (10) und/oder der Stützabschnitt (12) eine zylindrische Kontaktfläche (15) aufweisen.

12. Trampolin nach einem der Ansprüche 1 bis 11, **dadurch gekennzeichnet, dass** der Verbindungsabschnitt (14) als Stange ausgebildet ist.

13. Trampolin nach einem der Ansprüche 1 bis 12, **dadurch gekennzeichnet, dass** der Zentrierabschnitte (10) und/oder der Stützabschnitt (12) eine zentrale Öffnung (19) aufweist, in die der Verbindungsabschnitt (14) eingreift.

14. Trampolin nach einem der Ansprüche 1 bis 13, **dadurch gekennzeichnet, dass** die Länge des Verbindungsabschnitts (14) mindestens 3 cm beträgt.

15. Trampolin nach einem der Ansprüche 1 bis 14, **dadurch gekennzeichnet, dass** jedes Verbindungsstück (9) einen zweiten Zentrierabschnitt (11) und einen zweiten Stützabschnitt (13) aufweist, wobei der zweite Zentrierabschnitt (11) und der zweite Stützabschnitt (13) mit Abstand über einen zweiten Verbindungsabschnitt (14) verbunden sind, der einen kleineren Durchmesser (d) aufweist als der Zentrierabschnitt (11) und der Stützabschnitt (13) und wobei jedes Verbindungsstück (9) mit dem zweiten Zentrierabschnitt (11) und dem zweiten Stützabschnitt (13) in ein zweites Rahmensegment (6a; 6b; 6c) einsteckbar oder eingesteckt ist.

## Claims

1. Trampoline, with
- a frame (2) comprising a plurality of frame segments (6a; 6b; 6c), and with
- a plurality of connectors (9),
- wherein each connector (9) is designed to connect two frame segments (6a; 6b; 6c) to each other, and
- wherein legs (3) issue from the frame (2),
**characterized in that**:
- each connector (9) has at least one first centring section (10) and at least one first support section (12),
- each connector (9) is inserted or insertable with the first centring section (10) and the first support section (12) into a first frame segment (6a; 6b; 6c),
- the centring section (10) is connected to the support section (12) at a distance via a first connection section (14), which has a smaller diameter (d) than the centring section and the support section,
- the support section (12) has a contact surface (15) for bearing on an inner surface (16) of the frame segment (6a; 6b; 6c), and
- two mutually adjacent frame segments (6a; 6b; 6c) form a connection point (7) lying between two legs (3) of the trampoline.

2. Trampoline according to Claim 1, **characterized in that** the centring section (10), the support section (12) and preferably the first connection section (14) lie on a common straight axis (A1).

3. Trampoline according to Claim 1 or 2, **characterized in that** the legs (3) are arranged at corners (1) of the frame.

4. Trampoline according to any one of Claims 1 to 3, **characterized in that** the frame segments (6a; 6b; 6c) are designed as a tube with an inner surface (16) and that, in the assembled state of the trampoline, the centring section (10) and the support section (12) bear on the inner surface (16).

5. Trampoline according to Claim 4, **characterized in that** the first connection section (14) does not bear on the inner surface (16) in the assembled state of the trampoline.

6. Trampoline according to any one of Claims 1 to 5, **characterized in that** the connector (9) is made of solid material.

7. Trampoline according to any one of Claims 1 to 6, **characterized in that** the connector (9) has a radial web (17), which limits the depth of insertion of the connector (9) into the first frame segment (6a; 6b; 6c).

8. Trampoline according to Claim 7, **characterized in that** the web (17) is designed extending at least partially, preferably completely, in the circumferential direction.

9. Trampoline according to Claim 7 or 8, **characterized in that** the web (17) has an outer diameter (D2), which substantially corresponds to the outer diameter (D3) of an adjacent frame segment (6a; 6b; 6c).

10. Trampoline according to any one of Claims 7 to 9, **characterized in that** the web (17) forms at least one lateral abutment surface (18) for a frame segment (6a; 6b; 6c) .

11. Trampoline according to any one of Claims 1 to 10, **characterized in that** the centring section (10) and/or the support section (12) have a cylindrical contact surface (15).

12. Trampoline according to any one of Claims 1 to 11, **characterized in that** the connection section (14) is formed as a rod.

13. Trampoline according to any one of Claims 1 to 12, **characterized in that** the centring section (10) and/or the support section (12) has a central opening (19) into which the connection section (14) engages.

14. Trampoline according to any one of Claims 1 to 13, **characterized in that** the length of the connection section (14) is at least 3 cm.

15. Trampoline according to any one of Claims 1 to 14, **characterized in that** each connector (9) has a second centring section (11) and a second support section (13), wherein the second centring section (11) and the second support section (13) are connected at a distance via a second connection section (14), which has a smaller diameter (d) than the centring section (11) and the support section (13), and wherein each connector (9) is insertable or inserted with the second centring section (11) and the second support section (13) into a second frame segment (6a; 6b; 6c).

## Revendications

1. Trampoline, comportant
- un cadre (2), qui comprend une pluralité de segments de cadre (6a ; 6b ; 6c), et comportant
- une pluralité de pièces de liaison (9),
- chaque pièce de liaison (9) étant réalisée pour relier deux segments de cadre (6a ; 6b ; 6c) l'un à l'autre, et
- des pieds (3) partant du cadre (2),
**caractérisé en ce**
- **que** chaque pièce de liaison (9) comprend au moins une première section de centrage (10) ainsi qu'au moins une première section de support (12),
- **que** chaque pièce de liaison (9) est insérée ou peut être insérée par la première section de centrage (10) et la première section de support (12) dans un premier segment de cadre (6a ; 6b ; 6c),
- **que** la section de centrage (10) est reliée à la section de support (12) à distance par une première section de liaison (14), qui comprend un diamètre (d) inférieur à celui de la section de centrage et de la section de support,
- **que** la section de support (12) comprend une surface de contact (15) destinée à venir en appui sur une surface intérieure (16) du segment de cadre (6a ; 6b ; 6c), et
- **que** deux segments de cadre (6a ; 6b ; 6c) contigus forment un point de liaison (7) qui se trouve entre deux pieds (3) du trampoline.

2. Trampoline selon la revendication 1, **caractérisé en ce que** la section de centrage (10), la section de support (12) et de préférence la première section de liaison (14) sont situées sur un axe rectiligne commun (A1).

3. Trampoline selon la revendication 1 ou 2, **caractérisé en ce que** les pieds (3) sont disposées sur des coins (1) du cadre.

4. Trampoline selon l'une des revendications 1 à 3, **caractérisé en ce que** les segments de cadre (6a ; 6b ; 6c) sont réalisés sous forme de tube avec une surface intérieure (16) et que, à l'état assemblé du trampoline, la section de centrage (10) et la section de support (12) reposent sur la surface intérieure (16).

5. Trampoline selon la revendication 4, **caractérisé en ce que** la première section de liaison (14) ne repose pas sur la surface intérieure (16) dans l'état assemblé du trampoline.

6. Trampoline selon l'une des revendications 1 à 5, **caractérisé en ce que** la pièce de liaison (9) est réalisée à partir d'un matériau massif.

7. Trampoline selon l'une des revendications 1 à 6, **caractérisé en ce que** la pièce de liaison (9) comprend une nervure radiale (17), qui limite la profondeur d'insertion de la pièce de liaison (9) dans le premier segment de cadre (6a ; 6b ; 6c).

8. Trampoline selon la revendication 7, **caractérisé en ce que** la nervure (17) est réalisée au moins en partie, de préférence complètement, en périphérie dans la direction circonférentielle.

9. Trampoline selon la revendication 7 ou 8, **caractérisé en ce que** la nervure (17) comprend un diamètre extérieur (D2) qui correspond sensiblement au diamètre extérieur (D3) d'un segment de cadre (6a ; 6b ; 6c) adjacent.

10. Trampoline selon l'une des revendications 7 à 9, **caractérisé en ce que** la nervure (17) forme au moins une surface d'appui latérale (18) pour un segment de cadre (6a ; 6b ; 6c).

11. Trampoline selon l'une des revendications 1 à 10, **caractérisé en ce que** la section de centrage (10) et/ou la section de support (12) comprennent une surface de contact cylindrique (15).

12. Trampoline selon l'une des revendications 1 à 11, **caractérisé en ce que** la section de liaison (14) est réalisée sous la forme d'une tige.

13. Trampoline selon l'une des revendications 1 à 12, **caractérisé en ce que** la section de centrage (10) et/ou la section de support (12) comprennent une ouverture centrale (19), avec laquelle la section de liaison (14) vient en prise.

14. Trampoline selon l'une des revendications 1 à 13, **caractérisé en ce que** la longueur de la section de liaison (14) est d'au moins 3 cm.

15. Trampoline selon l'une des revendications 1 à 14, **caractérisé en ce que** chaque pièce de liaison (9) comprend une deuxième section de centrage (11) et une deuxième section de support (13), la deuxième section de centrage (11) et la deuxième section de support (13) étant reliées à distance par une deuxième section de liaison (14), qui comprend un diamètre (d) inférieur à celui de la section de centrage (11) et de la section de support (13), et chaque pièce de liaison (9) pouvant être insérée ou étant insérée par la deuxième section de centrage (11) et la deuxième section de support (13) dans un deuxième segment de cadre (6a ; 6b ; 6c).
